# EUROPÄISCHE PATENTANMELDUNG

(11) **EP 4 462 086 A2**
(43) Veröffentlichungstag der Anmeldung: **13.11.2024**
(21) Anmeldenummer: 24174874.8
(22) Anmeldetag: 08.05.2024
(51) Int. Cl.: G01F 1/66, G01F 15/00

(54) **REFLEKTORVORRICHTUNG FÜR EIN ULTRASCHALLDURCHFLUSSMESSGERÄT UND ULTRASCHALLDURCHFLUSSMESSGERÄT**

(30) Priorität: 11.05.2023 DE 102023112508
(71) Anmelder: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patentanwälte

(57) **Zusammenfassung**

Dargestellt und beschrieben ist eine Vorrichtung (5) für ein Ultraschalldurchflussmessgerät (1). Die Vorrichtung (5) weist einen Strömungsgleichrichter (13) und eine Reflektorvorrichtung (14) auf. Das Ultraschalldurchflussmessgerät (1) weist ein Messrohr (2) mit einem Messrohrinnenraum (7) und einer Messrohrlängsachse (8) und einen in den Messrohrinnenraum (7) hineinragenden Ultraschallwandler (3) auf. Der Strömungsgleichrichter (13) ist zum Einsetzen in das Messrohr (2) ausgebildet. Die Reflektorvorrichtung (14) weist einen Reflektorkörper (16) und einen auf dem Reflektorkörper (16) angeordneten Ultraschallreflektor (17) auf. Der Strömungsgleichrichter (13) und der Reflektorkörper (16) sind miteinander verbunden. Wenn der Strömungsgleichrichter (13) in das Messrohr (2) eingesetzt ist, ist die Vorrichtung (5) im Messrohrinnenraum (7) angeordnet und lenkt der Ultraschallreflektor (17) einen vom Ultraschallwandler (3) ausgehenden Ultraschallmesspfad (20) um, sodass sich der Ultraschallmesspfad (20) auch durch den Messrohrinnenraum (7) entlang der Messrohrlängsachse (8) erstreckt.

Die Erfindung löst die Aufgabe eine Wiederholbarkeit von Messungen eines Durchflusses eines Mediums durch das Messrohr eines Ultraschalldurchflussmessgeräts (1) der beschriebenen Art zu verbessern.

Die Aufgabe ist dadurch gelöst, dass der Strömungsgleichrichter (13) eine erste Rotationssymmetrie um eine erste Symmetrieachse (21) aufweist. Dass die Vorrichtung (5) einen Träger (15) mit einem ersten Trägerende (18) und einem zweiten Trägerende (19) aufweist und das erste Trägerende (18) unmittelbar mit dem Strömungsgleichrichter (13) verbunden ist und das zweite Trägerende (19) den Reflektorkörper (16) unmittelbar trägt. Dass der Träger (15) eine zweite Rotationssymmetrie um eine zweite Symmetrieachse (22) aufweist. Dass die erste Symmetrieachse (21) und die zweite Symmetrieachse (22) koaxial zueinander sind. Und dass der Ultraschallreflektor (17) vom Strömungsgleichrichter (13) entlang der zweiten Symmetrieachse (22) durch den Träger (15) einen Reflektorabstand (a) aufweist.

## Beschreibung

Die Erfindung betrifft zum einen eine Vorrichtung für ein Ultraschalldurchflussmessgerät. Die Vorrichtung weist einen Strömungsgleichrichter und eine Reflektorvorrichtung auf.

Das Ultraschalldurchflussmessgerät, für welches diese Vorrichtung bestimmt ist, weist ein Messrohr und einen Ultraschallwandler auf. Das Messrohr weist einen Messrohrinnenraum und eine Messrohrlängsachse auf. Der Ultraschallwandler ragt in den Messrohrinnenraum hinein.

Der Strömungsgleichrichter ist zum Einsetzen in das Messrohr ausgebildet. Die Reflektorvorrichtung weist einen Reflektorkörper und einen auf dem Reflektorkörper angeordneten Ultraschallreflektor auf. Der Strömungsgleichrichter und der Reflektorkörper sind miteinander verbunden.

Wenn der Strömungsgleichrichter in das Messrohr des Ultraschallwandlers eingesetzt ist, dann ist die Vorrichtung im Messrohrinnenraum angeordnet. Weiter lenkt der Ultraschallreflektor einen vom Ultraschallwandler ausgehenden Ultraschallmesspfad um, sodass sich der Ultraschallmesspfad auch durch den Messrohrinnenraum entlang der Messrohrlängsachse erstreckt.

Die Erfindung betrifft zum anderen auch ein Ultraschalldurchflussmessgerät. Das Ultraschalldurchflussmessgerät weist ein Messrohr, einen Ultraschallwandler und eine Vorrichtung auf.

Das Messrohr weist einen Messrohrinnenraum und eine Messrohrlängsachse auf. Der Ultraschallwandler ragt in den Messrohrinnenraum hinein. Die Vorrichtung weist einen Strömungsgleichrichter und eine Reflektorvorrichtung auf. Der Strömungsgleichrichter ist zum Einsetzen in das Messrohr ausgebildet und ist in das Messrohr eingesetzt. Die Vorrichtung ist im Messrohrinnenraum angeordnet.

Die Reflektorvorrichtung weist einen Reflektorkörper und einen auf dem Reflektorkörper angeordneten Ultraschallreflektor auf. Der Strömungsgleichrichter und der Reflektorkörper sind miteinander verbunden. Der Ultraschallreflektor lenkt einen vom Ultraschallwandler ausgehenden Ultraschallmesspfad um, sodass sich der Ultraschallmesspfad auch durch den Messrohrinnenraum entlang der Messrohrlängsachse erstreckt.

Somit ordnet der in das Messrohr eingesetzte Strömungsgleichrichter den Ultraschallreflektor im Messrohrinnenraum an, sodass der Ultraschallmesspfad ausgehend vom Ultraschallwandler durch den Ultraschallreflektor derart umgelenkt wird, dass er sich durch den Messrohrinnenraum entlang der Messrohrlängsachse erstreckt. Der Ultraschallmesspfad ist bidirektional.

Der Ultraschallwandler ist ausgebildet, Ultraschallsignale zu erzeugen und in ein Medium im Messrohrinnenraum abzustrahlen. Für gewöhnlich ist er auch ausgebildet, Ultraschallsignale zu empfangen.

Im Betrieb des Ultraschalldurchflussmessgeräts ist der Messrohrinnenraum mit einem Medium gefüllt und misst das Ultraschalldurchflussmessgerät einen Durchfluss des Mediums durch den Messrohrinnenraum. Dabei breiten sich vom Ultraschallwandler erzeugte und in das Medium abgestrahlte Ultraschallsignale entlang des Ultraschallmesspfads aus und werden vom Ultraschallreflektor reflektiert.

Das Hineinragen des Ultraschallwandlers in den Messrohrinnenraum bedeutet, dass der Ultraschallwandler Kontakt mit dem Medium im Messrohrinnenraum hat. Dazu kann der Ultraschallwandler bündig mit einer Wandung des Messrohrs, über die Wandung des Messrohrs hinausragend oder zurückversetzt zur Wandung angeordnet sein.

Aus dem Stand der Technik bekannte Ultraschalldurchflussmessgeräte der beschriebenen Art weisen grundsätzlich neben dem Ultraschallwandler einen weiteren Ultraschallwandler und neben der Vorrichtung eine weitere Vorrichtung auf. Solche Ultraschalldurchflussmessgeräte weisen somit einen weiteren Strömungsgleichrichter, eine weitere Reflektorvorrichtung, einen weiteren Reflektorkörper und einen weiteren Ultraschallreflektor auf, die ebenfalls wie die zuvor beschrieben ausgebildet sind.

Bei einem solchen Ultraschalldurchflussmessgerät sind zum Beispiel der Ultraschallwandler und der weitere Ultraschallwandler senkrecht zur Messrohrlängsachse angeordnet. Dementsprechend sind die Reflektorvorrichtung und die weitere Reflektorvorrichtung derart im Messrohrinnenraum angeordnet, dass der Ultraschallmesspfad von dem Ultraschallreflektor und dem weiteren Ultraschallreflektor jeweils um 90° umgelenkt wird, wodurch der Ultraschallmesspfad auch entlang der Messrohrlängsachse verläuft. Es gibt nur einen einzigen Ultraschallmesspfad. Ein solches Ultraschalldurchflussmessgerät ist zum Beispiel aus der WO 2018/206536 bekannt.

Ultraschalldurchflussmessgeräte der beschriebenen Art werden zum Beispiel zur Durchflussmessung von Frischwasser als Medium in der städtischen Wasserversorgung und in Abfüllanlagen auch für andere Medien eingesetzt.

Ein wichtiges Leistungsmerkmal von Ultraschalldurchflussmessgeräten ist eine Wiederholbarkeit von Messungen eines konstanten Durchflusses eines Mediums durch das Messrohr eines Ultraschalldurchflussmessgeräts. Eine Wiederholbarkeit ist ein Maß für Abweichungen von aufeinanderfolgenden Messungen untereinander bei gleichen Bedingungen. Gleiche Bedingungen umfassen hier insbesondere den konstanten Durchfluss des Mediums.

Untersuchungen an aus dem Stand der Technik bekannten Ultraschalldurchflussmessgeräten haben einen Nachteil aufgedeckt. Die Vorrichtung bei einem solchen Ultraschalldurchflussmessgerät verursacht auch bei einem konstanten Durchfluss eines Mediums durch das Messrohr zum einen unsymmetrische stationäre und zum anderen transiente Störungen in einer Strömung des Mediums, welche die Wiederholbarkeit von Messungen des Durchflusses negativ beeinträchtigen. Die Störungen sind insbesondere Turbulenzen.

Bei vielen Anwendungen, zum Beispiel in der städtischen Wasserversorgung, kommt hinzu, dass eine Strömung eines Mediums im Messrohr einen hohen Turbulenzgrad aufweist. Ein hoher Turbulenzgrad ist jedoch zusätzlich abträglich für die Wiederholbarkeit.

Aufgabe der vorliegenden Erfindung ist eine Verbesserung einer Wiederholbarkeit von Messungen eines Durchflusses eines Mediums durch das Messrohr eines Ultraschalldurchflussmessgeräts der beschriebenen Art. Zusätzlich soll die Verbesserung kostengünstig und auf einfache Weise umsetzbar sein.

Die Aufgabe ist zum einen durch eine Vorrichtung mit den Merkmalen von Anspruch 1 gelöst. Diese Vorrichtung ist durch die folgenden Merkmale gekennzeichnet. Der Strömungsgleichrichter weist eine erste Rotationssymmetrie um eine erste Symmetrieachse auf. Die Vorrichtung weist einen Träger mit einem ersten Trägerende und einem zweiten Trägerende auf, wobei das erste Trägerende unmittelbar mit dem Strömungsgleichrichter verbunden ist und das zweite Trägerende den Reflektorkörper unmittelbar trägt. Der Träger weist eine zweite Rotationssymmetrie um eine zweite Symmetrieachse auf. Die erste Symmetrieachse und die zweite Symmetrieachse sind koaxial zueinander. Der Ultraschallreflektor weist vom Strömungsgleichrichter entlang der zweiten Symmetrieachse durch den Träger einen Reflektorabstand auf.

Unter Rotationssymmetrie wird hier eine Symmetrie verstanden, welche einen dreidimensionalen Körper auf sich selbst abbildet, wenn dieser um eine Symmetrieachse um einen Winkel gedreht wird, welcher größer als 0° und kleiner als 360° ist.

Diese Vorrichtung erzeugt eingesetzt in das Ultraschalldurchflussmessgerät und im Betrieb des Ultraschalldurchflussmessgeräts im Wesentlichen rotationssymmetrische Störungen in Bezug auf die erste Symmetrieachse in einer Strömung eines Mediums im Bereich des Ultraschallmesspfads, wobei diese Störungen auch wesentlich geringer sind als in Ultraschalldurchflussmessgeräten aus dem Stand der Technik. Dadurch ist eine Wiederholbarkeit von Messungen eines Durchflusses des Mediums durch das Ultraschalldurchflussmessgerät deutlich verbessert.

Einige der nachfolgenden Ausgestaltungen der Vorrichtung werden notwendigerweise mit Bezug auf das Ultraschalldurchflussmessgerät beschrieben, für welches die Vorrichtung bestimmt ist, welches jedoch im Zusammenhang mit der Vorrichtung nicht beansprucht ist.

In einer Ausgestaltung der Vorrichtung sind nicht nur die erste Symmetrieachse und die zweite Symmetrieachse zueinander koaxial, sondern sind auch die Messrohrlängsachse und die erste Symmetrieachse koaxial zueinander. Durch die zusätzliche Koaxialität der Messrohrlängsachse zu den beiden Symmetrieachsen ist die Rotationssymmetrie in den Störungen in der Strömung des Mediums durch das Messrohr weiter verbessert und sind diese Störungen auch weiter reduziert.

Der Reflektorabstand ist durch den Träger bewirkt. In einer weiteren Ausgestaltung ist der Träger stabförmig, vorzugsweise mit einer kreisrunden Querschnittsfläche, welche senkrecht auf der zweiten Symmetrieachse steht. Zum Beispiel ist der Träger ein Stab. Ein solcher Träger ist auf einfache Weise herstellbar.

Der Träger wird entlang der zweiten Symmetrieachse von einem Medium umströmt. Deshalb ist in einer weiteren Ausgestaltung vorgesehen, dass der Träger eine Stromlinienform für einen geringen Strömungswiderstand eines Mediums aufweist. Vorzugsweise ist das erste Trägerende durch den Strömungsgleichrichter hindurch geführt und abgerundet. Schon diese Abrundung des ersten Trägerendes bewirkt eine Stromlinienform des Trägers, welche den Strömungswiderstand des Mediums reduziert.

In einer weiteren Ausgestaltung weist der Reflektorkörper eine Reflektorfläche auf. Die Reflektorfläche und die zweite Symmetrieachse spannen einen Reflektorwinkel auf. Der Ultraschallreflektor ist auf der Reflektorfläche angeordnet. Der Reflektorwinkel liegt bevorzugt zwischen 115° und 155°, besonders bevorzugt zwischen 125° und 145° und ganz besonders bevorzugt bei 135°. Wenn der Reflektorwinkel bei 135° liegt und der Ultraschallwandler mit einem Winkel von 90°, also senkrecht, zur Messrohrlängsachse angeordnet ist, dann lenkt die Reflektorvorrichtung den Ultraschallmesspfad um 90° um. Ein anderer Reflektorwinkel als 135° erfordert einen entsprechenden anderen Winkel des Ultraschallwandlers als 90°. Ein kleinerer Reflektorwinkel als 135° bewirkt eine höhere Rotationssymmetrie der Reflektorfläche bezüglich der zweiten Symmetrieachse. Bei einem Reflektorwinkel von 90° ist die Reflektorfläche rotationssymmetrisch bezüglich der zweiten Symmetrieachse, jedoch ist die dazu passende Anordnung des Ultraschallwandlers praktisch unmöglich. In einer Weiterbildung ist die Reflektorfläche der Ultraschallreflektor.

In einer weiteren Ausgestaltung der Vorrichtung weist der Reflektorkörper eine dritte Rotationssymmetrie um die zweite Symmetrieachse auf. Diese dritte Rotationssymmetrie bewirkt eine weitere Reduktion von Störungen in der Strömung des Mediums.

Bei einer Vorrichtung, welche die zuvor beschriebene Reflektorfläche und die zuvor beschriebene dritte Rotationssymmetrie aufweist, ist in einer Ausgestaltung vorgesehen, dass der Reflektorkörper einen Keil mit einer ersten Keilfläche und einer zweiten Keilfläche aufweist, dass die erste Keilfläche und die zweite Keilfläche einander gegenüberliegen und dass die erste Keilfläche die Reflektorfläche aufweist. Die dritte Rotationssymmetrie ist dergestalt, dass der Keil bei einer Drehung um 180° um die zweite Symmetrieachse auf sich selbst abgebildet wird.

In einer weiteren Ausgestaltung der Vorrichtung weist der Reflektorkörper eine Stromlinienform für einen geringen Strömungswiderstand eines Mediums auf. Vorzugsweise ist die Stromlinienform durch ein auf dem Reflektorkörper aufgebrachtes Material mit einer niedrigen akustischen Impedanz realisiert. Die Stromlinienform wird vorzugsweise ebenfalls die zuvor beschriebene dritte Rotationssymmetrie um die zweite Symmetrieachse aufweisen. Zum Beispiel weist der Reflektorkörper ohne dass aufgebrachte Material nicht die dritte Rotationssymmetrie auf und wird die dritte Rotationssymmetrie erst durch das aufgebrachte Material realisiert. Die akustische Impedanz des Materials ist niedrig in Bezug auf ein Material des Reflektorkörpers, sodass der Ultraschallreflektor die Umlenkung des Ultraschallmesspfads bewirkt.

In einer weiteren Ausgestaltung ist der Reflektorkörper am zweiten Trägerende im Träger selbst ausgebildet. Diese Ausgestaltung der Vorrichtung ist auf einfache Weise und kostengünstig herstellbar. Das trifft insbesondere auf eine Weiterbildung dieser Ausgestaltung zu, bei welcher der Träger ein Stab ist und die Reflektorfläche im Stab selbst ausgebildet ist. Bei dieser ragt die Reflektorfläche seitlich nicht über den Träger hinaus.

In einer weiteren Ausgestaltung ist der Ultraschallreflektor aus einem Material mit einer hohen akustischen Impedanz. Bevorzugt ist der Ultraschallreflektor aus einem Metall und besonders bevorzugt aus einem Edelstahl oder einem Aluminium.

In einer weiteren zur zuvor beschriebenen Ausgestaltung alternativen Ausgestaltung ist die Vorrichtung aus einem Material mit einer hohen akustischen Impedanz. Bevorzugt ist sie aus einem Metall oder einem Kunststoff und besonders bevorzugt ist sie aus einem Edelstahl oder einem Aluminium.

Metalle weisen eine hohe akustische Impedanz auf. Edelstahl und Aluminium weisen zusätzlich gute chemische Eigenschaften in Bezug auf viele Medien auf, wozu insbesondere Beständigkeit zählt. Eine hohe akustische Impedanz gewährleistet gute Reflexionseigenschaften für Ultraschallsignale, welche von dem Ultraschallwandler erzeugt werden. Eine Herstellung der gesamten Vorrichtung aus einem Material vereinfacht und vergünstigt diese.

In einer weiteren Ausgestaltung ist zumindest eine der Komponenten Strömungsgleichrichter, Reflektorkörper und Träger ein Guss oder ein 3D-Druck. Die Vorrichtung weist also die Komponenten Strömungsgleichrichter, Reflektorkörper und Träger auf. Die Herstellung einer der Komponenten als einen Guss ist kostengünstig und die Herstellung einer der Komponenten als ein 3D-Druck erlaubt eine schnelle Anpassung von Eigenschaften der Vorrichtung.

In einer weiteren Ausgestaltung sind zumindest zwei der Komponenten Strömungsgleichrichter, Reflektorkörper und Träger einstückig und aus einem einzigen Stück hergestellt. Die Einstückigkeit verbessert insbesondere die Zuverlässigkeit der zumindest zwei Komponenten, da eine Verbindung der zwei Komponenten entfällt.

In einer weiteren Ausgestaltung weist der Strömungsgleichrichter einen Ring zum Einsetzen in das Messrohr und mindestens eine Leitschaufel zum Gleichrichten einer Strömung eines Mediums auf. Bevorzugt weist der Strömungsgleichrichter mindestens zwei und besonders bevorzugt mindestens drei Leitschaufeln auf. Weiter verbindet jede der mindestens einen Leitschaufel den Ring und den Träger unmittelbar miteinander. Die Leitschaufeln tragen also den Träger. In einer besonders bevorzugten Weiterbildung dieser Ausgestaltung ist der Träger einen Stab und ist der Reflektorkörper am zweiten Trägerende im Träger selbst ausgebildet. Die Verwendung von mehr als einer Leitschaufel erhöht eine Stabilität der Anordnung des Trägers und reduziert Schwingungen des Trägers. Wenn mehr als eine Leitschaufel vorhanden ist, dann sind sie vorzugsweise rotationssymmetrisch in Bezug auf die erste Symmetrieachse angeordnet.

In einer zur vorstehenden Ausgestaltung alternativen Ausgestaltung ist der Strömungsgleichrichter als Plattenströmungsgleichrichter ausgebildet. Im Vergleich zum Strömungsgleichrichter in der zuvor beschriebenen Ausgestaltung bewirkt der Plattenströmungsgleichrichter eine bessere Strömungsgleichrichtung. Der Preis dafür ist jedoch ein höherer Druckverlust des strömenden Mediums.

In einer weiteren Ausgestaltung weist der Strömungsgleichrichter einen Durchmesser auf und ist der Reflektorabstand größer als der halbe Durchmesser. Diese Bestimmung des Reflektorabstands bewirkt, dass sich reduzierte Störungen einer Strömung eines Mediums am Reflektorkörper einstellen.

Die Aufgabe ist zum anderen auch durch ein Ultraschalldurchflussmessgerät mit den Merkmalen von Anspruch 17 gelöst. Dieses Ultraschalldurchflussmessgerät ist durch die folgenden Merkmale gekennzeichnet. Der Strömungsgleichrichter weist eine erste Rotationssymmetrie um eine erste Symmetrieachse auf. Die Vorrichtung weist einen Träger mit einem ersten Trägerende und einem zweiten Trägerende auf. Das erste Trägerende ist unmittelbar mit dem Strömungsgleichrichter verbunden und das zweite Trägerende trägt unmittelbar den Reflektorkörper. Der Träger weist eine zweite Rotationssymmetrie um einein zweite Symmetrieachse auf. Die erste Symmetrieachse und die zweite Symmetrieachse sind koaxial zueinander. Der Ultraschallreflektor weist vom Strömungsgleichrichter entlang der zweiten Symmetrieachse durch den Träger einen Reflektorabstand auf.

In einer Ausgestaltung des Ultraschalldurchflussmessgeräts ist die Vorrichtung gemäß einer der zuvor beschriebenen Ausgestaltungen oder Weiterbildungen ausgebildet.

In einer Ausgestaltung ist das Messrohr entlang der Messrohrlängsachse in ein erstes Segment, ein zweites Segment und ein drittes Segment aufgeteilt. Das dritte Segment grenzt an das erste Segment und das zweite Segment grenzt an das dritte Segment. Das erste Segment weist einen ersten Durchmesser und das zweite Segment einen zweiten Durchmesser auf. Der erste Durchmesser ist größer als der zweite Durchmesser und ein Durchmesser des dritten Segments reduziert sich vom ersten Durchmesser am ersten Segment auf den zweiten Durchmesser am zweiten Segment. Der Strömungsgleichrichter ist in das erste Segment eingesetzt. Demnach verjüngt sich ein Durchmesser des Messrohrs entlang der Messrohrlängsachse in Strömungsrichtung eines Mediums durch das Messrohr. Durch die Verjüngung des Durchmessers des Messrohres sind Störungen in einer Strömung eines Mediums im zweiten Segment reduziert. Ein vorteilhaftes Verhältnis vom ersten Durchmesser zum zweiten Durchmesser ist zum Beispiel ungefähr 2 zu 1. Für gewöhnlich sind der erste und der zweite Durchmesser entlang der Messrohrlängsachse konstant.

In einer Weiterbildung der zuvor beschriebenen Ausgestaltung weist eine Messrohrinnenfläche des dritten Segments eine Form eines Kegelstumpfs mit einer Mantellinie auf. Die Mantellinie spannt mit der Messrohrlängsachse einen Kegelwinkel auf. Der Kegelwinkel liegt vorzugsweise zwischen 5° und 15° und ist besonders bevorzugt 10°. Diese Kegelwinkel bewirken, dass sich an einem Ende des dritten Segments keine Grenzschichtablösungen in einem durch das Messrohr strömenden Medium ereignen. Grundsätzlich ist der Kegelwinkel derart bestimmt, dass eine Grenzschichtablösung nicht stattfindet. Eine Grenzschichtablösung verursacht Rezirkulationswirbel im Medium, welche zu einem Druckabfall im Medium führen.

Wenn das Messrohr in die zuvor beschriebenen drei Segmente aufgeteilt ist, dann ist in einer Ausgestaltung vorgesehen, dass der Ultraschallwandler senkrecht auf der Mantellinie steht und vorzugsweise bündig mit der Messrohrinnenfläche des dritten Segments abschließt. Der Ultraschallwandler ist also bündig mit einer Wandung des Messrohrs angeordnet. Durch diese Anordnung des Ultraschallwandlers gibt es zum einen keine Tasche in der Wandung des Messrohrs, in welcher sich Ablagerungen anlagern könnten, und zum anderen keine Strukturen, welche Störungen in einer Strömung eines Mediums im Messohr verursachen könnten.

Wenn das Messrohr in die zuvor beschriebenen drei Segmente aufgeteilt ist, dann ist in einer Ausgestaltung vorgesehen, dass die Reflektorvorrichtung und der Ultraschallwandler im dritten Segment angeordnet sind. Dadurch liegt der Ultraschallmesspfad im Wesentlichen im zweiten Segment, in welchem Störungen in einer Strömung eines Mediums reduziert sind.

Wenn das Messrohr in die zuvor beschriebenen drei Segmente aufgeteilt ist, dann ist in einer weiteren Ausgestaltung vorgesehen, dass das dritte Segment und die Reflektorvorrichtung eine minimale erste Strömungsquerschnittsfläche bilden, dass das zweite Segment eine zweite Strömungsquerschnittsfläche aufweist und dass die erste Strömungsquerschnittsfläche von der zweiten Strömungsquerschnittsfläche eine Abweichung von weniger als 10 % hat, bevorzugt weniger als 5 %.

Wenn das Messrohr in die zuvor beschriebenen drei Segmente aufgeteilt ist, dann ist in einer weiteren Ausgestaltung vorgesehen, dass eine Messrohrinnenfläche zumindest des zweiten Segments mit einem Material mit einer niedrigen akustischen Impedanz ausgekleidet ist oder zumindest das zweite Segment aus diesem Material besteht. Vorzugsweise ist das Material ein Kunststoff. Eine niedrige akustische Impedanz dämpft Reflexionen von Ultraschallsignalen. Im Fall des Messrohrs ist das gewünscht. Denn während sich Ultraschallsignale im Wesentlichen entlang der Messrohrlängsachse ausbreiten, erreichen sie auch die Innenwand des Messrohrs. Reflexionen von Ultraschallsignalen an der Innenwand beeinträchtigen jedoch eine Messung eines Durchflusses eines Mediums durch das Messrohr. Die Begriffe hoch und niedrig in Bezug auf akustische Impedanz beziehen sich insbesondere auf die akustische Impedanz eines Mediums im Messrohr.

In einer weiteren Ausgestaltung des Ultraschalldurchflussmessgeräts weist das Ultraschalldurchflussmessgerät einen weiteren in den Messrohrinnenraum hineinragenden Ultraschallwandler und eine weitere Vorrichtung gemäß einer der zuvor beschriebenen Ausgestaltungen und Weiterbildungen auf. Weiter erstreckt sich der Ultraschallmesspfad vom Ultraschallwandler über den Ultraschallreflektor durch den Messrohrinnenraum entlang der Messrohrlängsachse über den weiteren Ultraschallreflektor zum weiteren Ultraschallwandler. Somit weist das Ultraschalldurchflussmessgerät mit der weiteren Vorrichtung einen weiteren Strömungsgleichrichter, eine weitere Reflektorvorrichtung, einen weiteren Reflektorkörper und einen weiteren Ultraschallreflektor auf.

Bei bestimmten Anwendungen weist eine Strömung eines Mediums starke Störungen auf. Um die Wiederholbarkeit von Messungen eines Durchflusses des Mediums durch das Ultraschalldurchflussmessgerät zu verbessern, ist deshalb vorzugsweise vorgesehen, dass der Strömungsgleichrichter als Plattenströmungsgleichrichter und der weitere Strömungsgleichrichter gemäß der zuvor beschriebenen Ausgestaltung mit Leitschaufeln ausgebildet ist.

In einer Weiterbildung der zuvor beschriebenen Ausgestaltung ist das Messrohr spiegelsymmetrisch bezüglich einer Spiegelebene senkrecht zur Messrohrlängsachse. Weiter sind der Ultraschallwandler und der weitere Ultraschallwandler spiegelsymmetrisch bezüglich der Spiegelebene zueinander angeordnet. Auch die Vorrichtung und die weitere Vorrichtung sind spiegelsymmetrisch bezüglich der Spiegelebene zueinander angeordnet. Dadurch ist das Ultraschalldurchflussmessgerät ausgebildet, einen Durchfluss eines Mediums in beiden Strömungsrichtungen des Mediums mit einer Kalibrierung für nur eine der beiden Richtungen zu messen.

Wenn das Ultraschalldurchflussmessgerät die zuvor beschriebene weitere Vorrichtung aufweist, dann ist in einer Ausgestaltung vorgesehen, dass die Vorrichtung und die weitere Vorrichtung gleich ausgebildet sind.

Im Übrigen gelten die Ausführungen für die Vorrichtung entsprechend für das Ultraschalldurchflussmessgerät und umgekehrt.

Im Einzelnen ist eine Vielzahl von Möglichkeiten gegeben, die Vorrichtung für ein Ultraschalldurchflussmessgerät und das Ultraschalldurchflussmessgerät auszugestalten und weiterzubilden. Dazu wird verwiesen sowohl auf die den unabhängigen Ansprüchen nachgeordneten Ansprüche als auch auf die nachfolgende Beschreibung von bevorzugten Ausführungsbeispielen in Verbindung mit der Zeichnung. In der Zeichnung zeigt
- Figur 1: eine perspektivische Ansicht eines Ausführungsbeispiels eines Ultraschalldurchflussmessgeräts mit einem Ausführungsbeispiel einer Vorrichtung,
- Figur 2: eine Vorderansicht des Ultraschalldurchflussmessgeräts,
- Figur 3: eine Schnittansicht des Ultraschalldurchflussmessgeräts,
- Figur 4: eine erste perspektivische Ansicht des Ausführungsbeispiels der Vorrichtung für das Ultraschalldurchflussmessgerät,
- Figur 5: eine zweite perspektivische Ansicht der Vorrichtung,
- Figur 6: eine Vorderansicht der Vorrichtung und
- Figur 7: eine Seitenansicht der Vorrichtung.

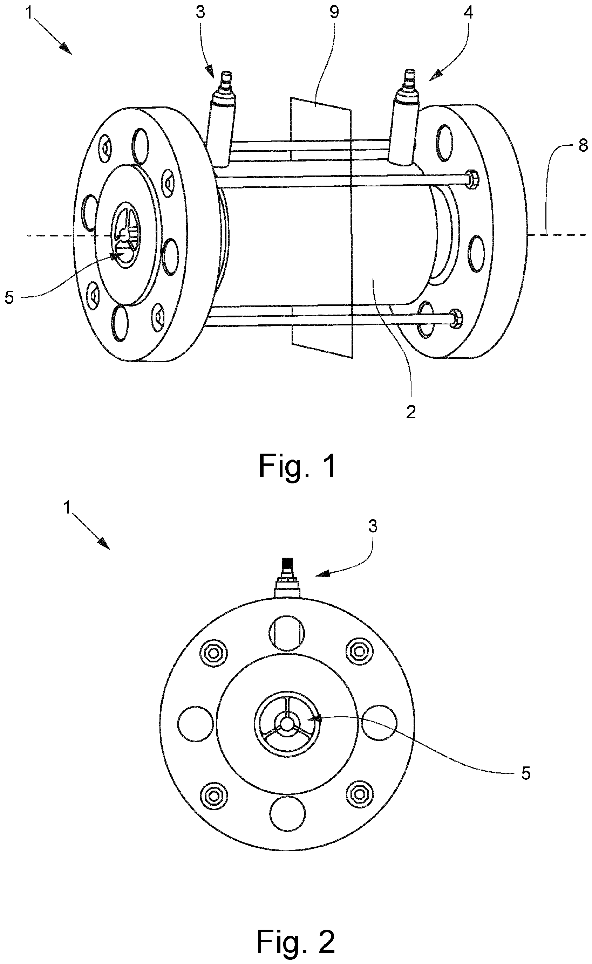

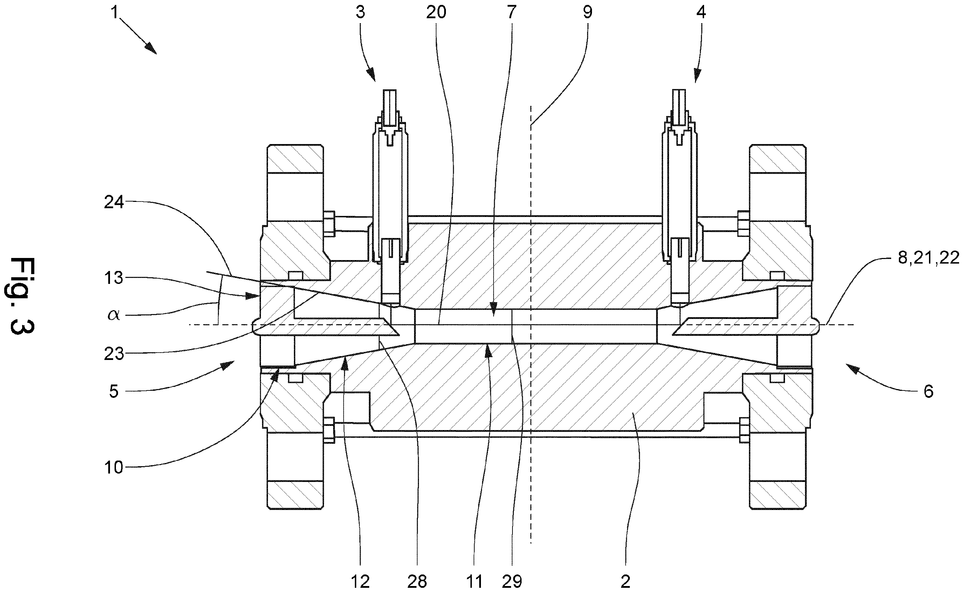

Die Figuren 1, 2 und 3 zeigen ein Ausführungsbeispiel eines Ultraschalldurchflussmessgeräts 1. Das Ultraschalldurchflussmessgerät 1 ist in Figur 1 in einer perspektivischen Ansicht, in Figur 2 in einer Vorderansicht und in Figur 3 in einer Schnittansicht gezeigt.

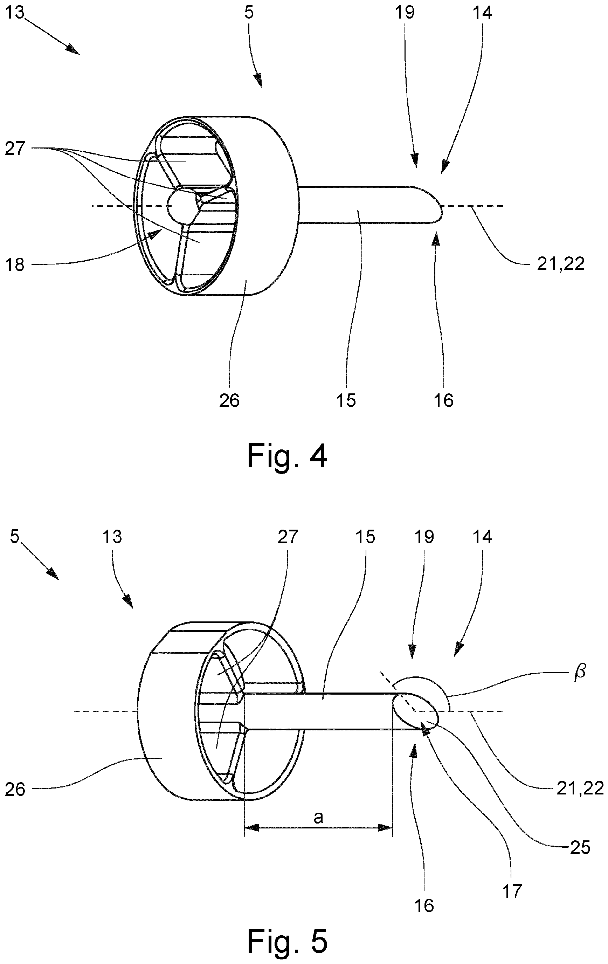

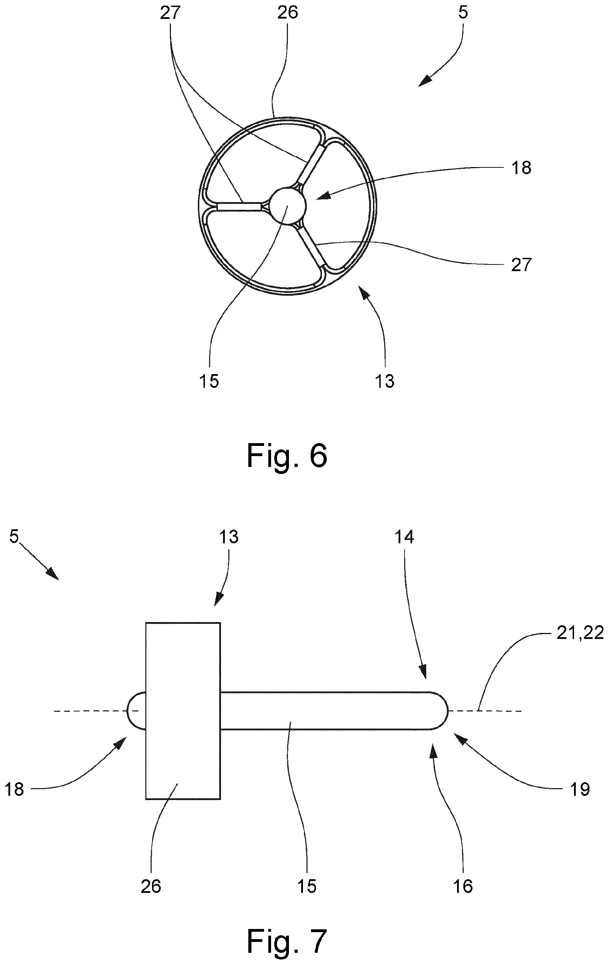

Das Ultraschalldurchflussmessgerät 1 weist ein Messrohr 2, einen Ultraschallwandler 3 einen weiteren Ultraschallwandler 4, eine Vorrichtung 5 und eine weitere Vorrichtung 6 auf. Zum einen sind der Ultraschallwandler 3 und der weitere Ultraschallwandler 4 und zum andere sind die Vorrichtung 5 und die weitere Vorrichtung 6 identisch ausgebildet. Deshalb beschränken sich die nachfolgenden Ausführungen grundsätzlich auf den Ultraschallwandler 3 und die Vorrichtung 5. Die Vorrichtung 5 ist in den Figuren 4, 5, 6 und 7 dargestellt. Figur 4 zeigt eine erste und Figur 5 eine zweite perspektivische Ansicht, Figur 6 eine Vorderansicht und Figur 7 eine Seitenansicht der Vorrichtung 5. Die Vorrichtung 5 ist einstückig aus einem einzigen Stück Edelstahl hergestellt. In diesem Ausführungsbeispiel wurde ein Edelstahl ausgewählt, da dieser eine noch höhere akustische Impedanz als ein Aluminium hat.

Das Messrohr 2 weist einen Messrohrinnenraum 7 und eine Messrohrlängsachse 8 auf und ist spiegelsymmetrisch bezüglich einer Spiegelebene 9. Die Spiegelebene 9 steht senkrecht auf der Messrohrlängsachse 8. Deshalb beschränken sich die nachfolgenden Ausführungen grundsätzlich auf die linke Hälfte des Messrohrs 2. Weiter sind zum einen der Ultraschallwandler 3 und der weitere Ultraschallwandler 4 und zum anderen sind die Vorrichtung 5 und die weitere Vorrichtung 6 spiegelsymmetrisch bezüglich der Spiegelebene 9 angeordnet.

Die linke Hälfte des Messrohrs 2 ist entlang der Messrohrlängsachse 8 in ein erstes Segment 10, ein zweites Segment 11 und in ein drittes Segment 12 aufgeteilt. Das dritte Segment 12 grenzt an das erste Segment 10 und das zweite Segment 11 grenzt an das dritte Segment 12. Das erste Segment 10 weist einen konstanten ersten Durchmesser von 22 mm und das zweite Segment 11 einen konstanten zweiten Durchmesser von 10 mm auf. Der erste Durchmesser ist größer als der zweite Durchmesser und ein Durchmesser des dritten Segments 12 reduziert sich vom ersten Durchmesser am ersten Segment 10 auf den zweiten Durchmesser am zweiten Segment 11. Gleiches gilt aufgrund der Spiegelsymmetrie für die rechte Hälfte des Messrohrs 2.

Der Ultraschallwandler 3 ragt in den Messrohrinnenraum 7 hinein und weist einen Winkel von 90° zur Messrohrlängsachse 8 auf. Er steht also senkrecht auf der Messrohrlängsachse 8.

Die Vorrichtung 5 weist einen Strömungsgleichrichter 13, eine Reflektorvorrichtung 14 und einen Träger 15 auf. Der Strömungsgleichrichter 13 ist zum Einsetzen in das Messrohr 2 ausgebildet und ist in das Messrohr 2 eingesetzt.

Die Reflektorvorrichtung 14 weist einen Reflektorkörper 16 und einen auf dem Reflektorkörper 16 angeordneten Ultraschallreflektor 17 auf.

Der Strömungsgleichrichter 13 und der Reflektorkörper 16 sind miteinander verbunden, und zwar durch den Träger 15. Der Träger 15 weist ein erstes Trägerende 18 und ein zweites Trägerende 19 auf. Das erste Trägerende 18 ist unmittelbar mit dem Strömungsgleichrichter 13 verbunden und das zweite Trägerende 19 trägt unmittelbar den Reflektorkörper 16.

Der Ultraschallreflektor 17 lenkt einen vom Ultraschallwandler 3 ausgehenden Ultraschallmesspfad 20 um, sodass sich der Ultraschallmesspfad 20 auch durch den Messrohrinnenraum 7 entlang der Messrohrlängsachse 8 erstreckt. Gleiches gilt für die rechte Hälfte des Durchflussmessgeräts 1. Somit erstreckt sich der Ultraschallmesspfad 20 vom Ultraschallwandler 3 über den Ultraschall Reflektor 17 der Vorrichtung 5 durch den Messrohrinnenraum 7 entlang der Messrohrlängsachse 8 über den weiteren Ultraschallreflektor der weiteren Vorrichtung 6 zum weiteren Ultraschallwandler 4. Der Ultraschallmesspfad ist bidirektional.

Der Strömungsgleichrichter 13 weist eine erste Rotationssymmetrie um eine erste Symmetrieachse 21 auf. Der Träger 15 weist eine zweite Rotationssymmetrie um eine zweite Symmetrieachse 22 auf. Die erste Symmetrieachse 21, die zweite Symmetrieachse 22 und die Messrohrlängsachse 8 sind koaxial zueinander. Der Ultraschallreflektor 17 weist vom Strömungsgleichrichter 13 entlang der zweiten Symmetrieachse 22 durch den Träger 15 einen Reflektorabstand a auf.

Eine Messrohrinnenfläche 23 des dritten Segments 12 weist eine Form eines Kegelstumpfs mit einer Mantellinie 24 auf. Die Mantellinie 24 spannt mit der Messrohrlängsachse 8 einen Kegelwinkel α von 10° auf.

Der Träger 15 ist ein Stab mit einer kreisrunden Querschnittsfläche. Das erste Trägerende 18 ist durch den Strömungsgleichrichter 13 hindurchgeführt und abgerundet, sodass der Träger 15 eine Stromlinienform für einen geringen Strömungswiderstand eines Mediums aufweist.

Der Reflektorkörper 16 ist am zweiten Trägerende 19 im Träger 15 selbst ausgebildet und weist eine Reflektorfläche 25 auf. Die Reflektorfläche 25 ist seitlich bündig mit dem Träger 15. Sie ragt also nicht über den Träger 15 hinaus. Der Ultraschallreflektor 17 ist die Reflektorfläche 25 selbst, da das Aluminium eine ausreichend hohe akustische Impedanz aufweist. Die Reflektorfläche 25 und die zweite Symmetrieachse 21 spannen einen Reflektorwinkel β von 135° auf. Der Ultraschallreflektor 17 ist auf der Reflektorfläche 25 angeordnet. Durch die senkrechte Anordnung des Ultraschallwandlers 3 und den Reflektorwinkel β von 135° wird der vom Ultraschallwandler 3 ausgehende Ultraschallmesspfad 20 durch den Ultraschallreflektor 17 um 90° umgelenkt, sodass er parallel zur Messrohrlängsachse 8 verläuft.

Der Strömungsgleichrichter 13 weist einen Ring 26 zum Einsetzen in das Messrohr 2 und drei Leitschaufeln 27 zum Gleichrichten einer Strömung eines Mediums auf. Jede der Leitschaufeln 27 verbindet den Ring 26 und den Träger 15 unmittelbar miteinander. Der Ring 26 ist in das erste Segment 10 des Messrohrs 2 eingesetzt und ordnet die Reflektorvorrichtung 14 im dritten Segment 12 an. Auch der Ultraschallwandler 3 ist im dritten Segment 12 angeordnet.

Das dritte Segment 12 und die Reflektorvorrichtung 14, genauer der Träger 15, bilden eine minimale erste Strömungsquerschnittsfläche 28 und das zweite Segment 11 weist eine zweite Strömungsquerschnittsfläche 29 für ein durch das Messrohr 2 strömendes Medium auf. Die minimale erste Strömungsquerschnittsfläche 28 ist so groß wie die zweite Strömungsquerschnittsfläche 29. Die erste Strömungsquerschnittsfläche 28 nimmt mit dem Durchmesser des dritten Segments 12 ab. Relevant ist hier die minimale erste Strömungsquerschnittsfläche 28.

### Bezugszeichen

- 1: Ultraschalldurchflussmessgerät
- 2: Messrohr
- 3: Ultraschallwandler
- 4: weiterer Ultraschallwandler
- 5: Vorrichtung
- 6: weitere Vorrichtung
- 7: Messrohrinnenraum
- 8: Messrohrlängsachse
- 9: Spiegelebene
- 10: erstes Segment des Messrohrs
- 11: zweites Segment des Messrohrs
- 12: drittes Segment des Messrohrs
- 13: Strömungsgleichrichter
- 14: Reflektorvorrichtung
- 15: Träger
- 16: Reflektorkörper
- 17: Ultraschallreflektor
- 18: erstes Trägerende
- 19: zweites Trägerende
- 20: Ultraschallmesspfad
- 21: erste Symmetrieachse
- 22: zweite Symmetrieachse
- 23: Messrohrinnenfläche im dritten Segment
- 24: Mantellinie
- 25: Reflektorfläche
- 26: Ring
- 27: Leitschaufel
- 28: erste Strömungsquerschnittsfläche
- 29: zweite Strömungsquerschnittsfläche
- a: Reflektorabstand
- α: Kegelwinkel
- β: Reflektorwinkel

## Patentansprüche

1. Vorrichtung (5) für ein Ultraschalldurchflussmessgerät (1),
wobei die Vorrichtung (5) einen Strömungsgleichrichter (13) und eine Reflektorvorrichtung (14) aufweist,
wobei das Ultraschalldurchflussmessgerät (1) ein Messrohr (2) mit einem Messrohrinnenraum (7) und einer Messrohrlängsachse (8) und einen in den Messrohrinnenraum (7) hineinragenden Ultraschallwandler (3) aufweist,
wobei der Strömungsgleichrichter (13) zum Einsetzen in das Messrohr (2) ausgebildet ist,
wobei die Reflektorvorrichtung (14) einen Reflektorkörper (16) und einen auf dem Reflektorkörper (16) angeordneten Ultraschallreflektor (17) aufweist,
wobei der Strömungsgleichrichter (13) und der Reflektorkörper (16) miteinander verbunden sind und
wobei, wenn der Strömungsgleichrichter (13) in das Messrohr (2) eingesetzt ist, die Vorrichtung (5) im Messrohrinnenraum (7) angeordnet ist und der Ultraschallreflektor (17) einen vom Ultraschallwandler (3) ausgehenden Ultraschallmesspfad (20) umlenkt, sodass sich der Ultraschallmesspfad (20) auch durch den Messrohrinnenraum (7) entlang der Messrohrlängsachse (8) erstreckt,
**dadurch gekennzeichnet,**
**dass** der Strömungsgleichrichter (13) eine erste Rotationssymmetrie um eine erste Symmetrieachse (21) aufweist,
**dass** die Vorrichtung (5) einen Träger (15) mit einem ersten Trägerende (18) und einem zweiten Trägerende (19) aufweist und das erste Trägerende (18) unmittelbar mit dem Strömungsgleichrichter (13) verbunden ist und das zweite Trägerende (19) den Reflektorkörper (16) unmittelbar trägt,
**dass** der Träger (15) eine zweite Rotationssymmetrie um eine zweite Symmetrieachse (22) aufweist,
**dass** die erste Symmetrieachse (21) und die zweite Symmetrieachse (22) koaxial zueinander sind und
**dass** der Ultraschallreflektor (17) vom Strömungsgleichrichter (13) entlang der zweiten Symmetrieachse (22) durch den Träger (15) einen Reflektorabstand (a) aufweist.

2. Vorrichtung (5) nach Anspruch 1, **dadurch gekennzeichnet, dass** die Messrohrlängsachse (8) und die erste Symmetrieachse (21) koaxial zueinander sind.

3. Vorrichtung (5) nach Anspruch 1 oder 2, **dadurch gekennzeichnet, dass** der Träger (15) stabförmig ist.

4. Vorrichtung (5) nach einem der Ansprüche 1 bis 3, **dadurch gekennzeichnet, dass** der Träger (15) eine Stromlinienform für einen geringen Strömungswiderstand eines Mediums aufweist, vorzugsweise das erste Trägerende (18) durch den Strömungsgleichrichter (13) hindurchgeführt und abgerundet ist.

5. Vorrichtung (5) nach einem der Ansprüche 1 bis 4, **dadurch gekennzeichnet, dass** der Reflektorkörper (16) eine Reflektorfläche (25) aufweist, dass die Reflektorfläche (25) und die zweite Symmetrieachse (22) einen Reflektorwinkel (β) aufspannen, dass der Ultraschallreflektor (17) auf der Reflektorfläche (25) angeordnet ist und dass der Reflektorwinkel (β) bevorzugt zwischen 115° und 155°, besonders bevorzugt zwischen 125° und 145° und ganz besonders bevorzugt bei 135° liegt.

6. Vorrichtung (5) nach einem der Ansprüche 1 bis 5, **dadurch gekennzeichnet, dass** der Reflektorkörper (16) eine dritte Rotationssymmetrie um die zweite Symmetrieachse (22) aufweist.

7. Vorrichtung (5) nach Anspruch 5 und 6, **dadurch gekennzeichnet, dass** der Reflektorkörper (16) einen Keil mit einer ersten Keilfläche und einer zweiten Keilfläche aufweist, dass die erste Keilfläche und die zweite Keilfläche einander gegenüberliegen und dass die erste Keilfläche die Reflektorfläche (25) aufweist.

8. Vorrichtung (5) nach einem der Ansprüche 1 bis 7, **dadurch gekennzeichnet, dass** der Reflektorkörper (16) eine Stromlinienform für einen geringen Strömungswiderstand eines Mediums aufweist, vorzugsweise die Stromlinienform durch ein auf den Reflektorkörper (16) aufgebrachtes Material mit einer niedrigen akustischen Impedanz realisiert ist.

9. Vorrichtung nach einem der Ansprüche 1 bis 8, **dadurch gekennzeichnet, dass** der Reflektorkörper (16) am zweiten Trägerende (19) im Träger (15) selbst ausgebildet ist.

10. Vorrichtung (5) nach einem der Ansprüche 1 bis 9, **dadurch gekennzeichnet, dass** der Ultraschallreflektor (17) aus einem Material mit einer hohen akustischen Impedanz ist, bevorzugt aus einem Metall ist und besonders bevorzugt aus einem Edelstahl oder einem Aluminium ist.

11. Vorrichtung (5) nach einem der Ansprüche 1 bis 9, **dadurch gekennzeichnet, dass** die Vorrichtung (5) aus einem Material mit einer hohen akustischen Impedanz ist, bevorzugt aus einem Metall oder einem Kunststoff und besonders bevorzugt aus einem Edelstahl oder einem Aluminium ist.

12. Vorrichtung (5) nach einem der Ansprüche 1 bis 11, **dadurch gekennzeichnet, dass** zumindest eine der Komponenten Strömungsgleichrichter (13), Reflektorkörper (16) und Träger (15) ein Guss oder ein 3D-Druck ist.

13. Vorrichtung (5) nach einem der Ansprüche 1 bis 12, **dadurch gekennzeichnet, dass** zumindest zwei der Komponenten Strömungsgleichrichter (13), Reflektorkörper (16) und Träger (15) einstückig und aus einem einzigen Stück hergestellt sind.

14. Vorrichtung (5) nach einem der Ansprüche 1 bis 13, **dadurch gekennzeichnet, dass** der Strömungsgleichrichter (13) einen Ring (26) zum Einsetzen in das Messrohr (2) und mindestens eine Leitschaufel (27), bevorzugt mindestens zwei Leitschaufeln (27), besonders bevorzugt mindestens drei Leitschaufeln (27), zum Gleichrichten einer Strömung eines Mediums aufweist, und dass jede der mindestens einen Leitschaufel (27) den Ring (26) und den Träger (15) unmittelbar miteinander verbindet.

15. Vorrichtung (5) nach einem der Ansprüche 1 bis 13, **dadurch gekennzeichnet, dass** der Strömungsgleichrichter (13) als Plattenströmungsgleichrichter ausgebildet ist.

16. Vorrichtung (5) nach einem der Ansprüche 1 bis 15, **dadurch gekennzeichnet, dass** der Strömungsgleichrichter (13) einen Durchmesser aufweist und der Reflektorabstand (a) größer ist als der halbe Durchmesser.

17. Ultraschalldurchflussmessgerät (1) mit einem Messrohr (2) mit einem Messrohrinnenraum (7) und einer Messrohrlängsachse (8), einem in den Messrohrinnenraum (7) hineinragenden Ultraschallwandler (3) und einer Vorrichtung (5),
wobei die Vorrichtung (5) einen Strömungsgleichrichter (13) und eine Reflektorvorrichtung (14) aufweist,
wobei der Strömungsgleichrichter (13) zum Einsetzen in das Messrohr (2) ausgebildet und in das Messrohr (2) eingesetzt ist,
wobei die Vorrichtung (5) im Messrohrinnenraum (7) angeordnet ist,
wobei die Reflektorvorrichtung (14) einen Reflektorkörper (16) und einen auf dem Reflektorkörper (16) angeordneten Ultraschallreflektor (17) aufweist,
wobei der Strömungsgleichrichter (13) und der Reflektorkörper (16) miteinander verbunden sind und
wobei der Ultraschallreflektor (17) einen vom Ultraschallwandler (3) ausgehenden Ultraschallmesspfad (20) umlenkt, sodass sich der Ultraschallmesspfad (20) auch durch den Messrohrinnenraum (7) entlang der Messrohrlängsachse (8) erstreckt,
**dadurch gekennzeichnet,**
**dass** der Strömungsgleichrichter (13) eine erste Rotationssymmetrie um eine erste Symmetrieachse (21) aufweist,
**dass** die Vorrichtung (5) einen Träger (15) mit einem ersten Trägerende (18) und einem zweiten Trägerende (19) aufweist und das erste Trägerende (18) unmittelbar mit dem Strömungsgleichrichter (13) verbunden ist und das zweite Trägerende (19) den Reflektorkörper (16) unmittelbar trägt,
**dass** der Träger (15) eine zweite Rotationssymmetrie um eine zweite Symmetrieachse (22) aufweist,
**dass** die erste Symmetrieachse (21) und die zweite Symmetrieachse (22) koaxial zueinander sind und
**dass** der Ultraschallreflektor (17) vom Strömungsgleichrichter (13) entlang der zweiten Symmetrieachse (22) durch den Träger (15) einen Reflektorabstand (a) aufweist.

18. Ultraschalldurchflussmessgerät (1) nach Anspruch 17, **dadurch gekennzeichnet, dass** die Vorrichtung (5) nach einem der Ansprüche 2 bis 16 ausgebildet ist.

19. Ultraschalldurchflussmessgerät (1) nach Anspruch 17 oder 18, **dadurch gekennzeichnet, dass** das Messrohr (2) entlang der Messrohrlängsachse in ein erstes Segment (10), ein zweites Segment (11) und ein drittes Segment (12) aufgeteilt ist, dass das dritte Segment (12) an das erste Segment (10) und das zweite Segment (11) an das dritte Segment (12) grenzt, dass das erste Segment (10) einen ersten Durchmesser und das zweite Segment (11) einen zweiten Durchmesser aufweist, dass der erste Durchmesser größer als der zweite Durchmesser ist und dass sich ein Durchmesser des dritten Segments (12) vom ersten Durchmesser am ersten Segment (10) auf den zweiten Durchmesser am zweiten Segment (11) reduziert und dass der Strömungsgleichrichter (13) in das erste Segment (10) eingesetzt ist.

20. Ultraschalldurchflussmessgerät (1) nach Anspruch 19, **dadurch gekennzeichnet, dass** eine Messrohrinnenfläche (23) des dritten Segments (12) eine Form eines Kegelstumpfs mit einer Mantellinie (24) aufweist, dass die Mantellinie (24) mit der Messrohrlängsachse (8) einen Kegelwinkel (α) aufspannt und dass der Kegelwinkel (α) vorzugsweise zwischen 5° und 15° liegt und besonders bevorzugt 10° ist.

21. Ultraschalldurchflussmessgerät (1) nach Anspruch 20, **dadurch gekennzeichnet, dass** der Ultraschallwandler (3) senkrecht auf der Mantellinie (24) steht und vorzugsweise bündig mit der Messrohrinnenfläche (23) des dritten Segments (12) abschließt.

22. Ultraschalldurchflussmessgerät (1) nach einem der Ansprüche 19 bis 21, **dadurch gekennzeichnet, dass** die Reflektorvorrichtung (14) und der Ultraschallwandler (3) im dritten Segment (12) angeordnet sind.

23. Ultraschalldurchflussmessgerät (1) nach einem der Ansprüche 19 bis 22 **dadurch gekennzeichnet, dass** das dritte Segment (12) und die Reflektorvorrichtung (14) eine minimale erste Strömungsquerschnittsfläche (28) bilden, dass das zweite Segment (11) eine zweite Strömungsquerschnittsfläche (29) aufweist und dass die erste Strömungsquerschnittsfläche (28) von der zweiten Strömungsquerschnittsfläche (29) eine Abweichung von weniger als 10 % hat, bevorzugt weniger als 5 %.

24. Ultraschalldurchflussmessgerät (1) nach einem der Ansprüche 19 bis 23, **dadurch gekennzeichnet, dass** eine Messrohrinnenfläche zumindest des zweiten Segments (11) mit einem Material mit einer niedrigen akustischen Impedanz ausgekleidet ist oder zumindest das zweite Segment (11) aus diesem Material besteht und dass vorzugsweise das Material ein Kunststoff ist.

25. Ultraschalldurchflussmessgerät (1) nach einem der Ansprüche 17 bis 24, **dadurch gekennzeichnet, dass** das Ultraschalldurchflussmessgerät (1) einen weiteren in den Messrohrinnenraum (7) hineinragenden Ultraschallwandler (4) und eine weitere Vorrichtung (6) gemäß einem der Ansprüche 1 bis 16 aufweist, dass sich der Ultraschallmesspfad (20) vom Ultraschallwandler (3) über den Ultraschallreflektor (17) durch den Messrohrinnenraum (7) auch entlang der Messrohrlängsachse (8) über den weiteren Ultraschallreflektor (17) zum weiteren Ultraschallwandler (4) erstreckt.

26. Ultraschalldurchflussmessgerät (1) nach Anspruch 25, **dadurch gekennzeichnet, dass** das Messrohr (2) spiegelsymmetrisch bezüglich einer Spiegelebene (9) senkrecht zu der Messrohrlängsachse (8) angeordnet ist und dass zum einen der Ultraschallwandler (3) und der weitere Ultraschallwandler (4) und zum anderen die Vorrichtung (5) und die weitere Vorrichtung (6) jeweils spiegelsymmetrisch bezüglich der Spiegelebene (9) angeordnet sind.

27. Ultraschalldurchflussmessgerät (1) nach Anspruch 25 oder 26, **dadurch gekennzeichnet, dass** die Vorrichtung (5) und die weitere Vorrichtung (6) gleich ausgebildet sind.
